# EUROPEAN PATENT APPLICATION

(11) **EP 1 182 648 A1**
(43) Date of publication of application: **27.02.2002**
(21) Application number: 01203186.0
(22) Date of filing: 22.08.2001
(51) Int. Cl.: G11B 5/31

(54) **Magnetic head**

(30) Priority: 22.08.2000 NL 1015985
(71) Applicant: OnStream Holding B.V., 5652 AC Eindhoven (NL)
(72) Inventor: Bijker, Martin, 5709 BR Helmond (NL); Bastiaens, Jozef Jeanne Jules, 3920 Lommel (BE); Jansen, John, 5652 AC Eindhoven (NL)
(74) Representative: Prins, Adrianus Willem

(57) **Abstract**

A magnetic head for reading and/or writing information in direct contact with a magnetic tape, is provided with a head face and a layer structure with magnetic flux conductors, a transducer element, and a transducer gap, the layer structure terminating at the head face, and the head face being at least partly provided with a wear-resistant layer. This wear-resistant layer has a thickness of less than 10 nm. In a preferred embodiment, the wear-resistant layer is built up from a chromium-oxygen layer in which the Cr, from inside to outside, changes from a Cr layer being mainly in the metallic mode into a Cr layer being mainly in the oxide mode, and in which, in the metallic mode, the chromium partly forms an alloy with the material of the magnetic flux conductors in the layer structure.

## Description

The present invention relates to a magnetic head for reading and/or writing information in direct contact with a magnetic tape, which magnetic head is provided with a head face and a layer structure with magnetic flux conductors, a transducer element, and a transducer gap, the layer structure terminating at the head face, and the head face being at least partly provided with a wear-resistant layer.

It is a well-known phenomenon that the layer structure in a magnetic head is subject to wear. In particular, the flux conductor material, that is to say the poles of the magnetic head, which are frequently made of NiFe alloys, shows greater wear than the insulating layers therebetween, often formed from SiO₂, and the Al₂O₃-containing ceramic materials between which the layer structure is embedded. The phenomenon is referred to as PTR (pole tip recession) or "hollowing through wear". The occurrence of PTR leads to losses occurring in the signal transfer between a medium, such as, for instance, a magnetic tape, and the magnetic head. Such losses will further be referred to as "distance losses". Wear on the head face, and therefore the occurrence of distance losses, can be inhibited by applying a wear-resistant layer. The application of a wear-resistant layer in itself also goes with the introduction of a distance loss; however, if this layer does not wear, the distance losses are frozen after the application of this layer.

U.S. patent 5,896,253 discloses a magnetic head in which the wear-resistant layer consists of an outer layer of Cr₂O₃ with an intermediate layer of Cr, the total layer thickness ranging between 10 and 100 nm. To obtain sufficiently wear-resistant properties, the Cr₂O₃ layer has such a thickness that in this layer relatively great compressive mechanical stresses are present. To keep the signal transfer between medium and magnetic head sufficiently accurate, the wear-resistant layer, and therefore in particular the Cr₂O₃ layer, must be as thin as possible. However, as this layer becomes thinner, the compressive mechanical stress in this layer decreases. In the U.S. patent, a minimum mechanical stress, and therefore a minimum layer thickness, is necessary to obtain sufficiently wear-resistant properties. In this U.S. patent, therefore, to obtain a stable adhesion of the Cr₂O₃ layer to the head face, an adhesive layer of CR is used. Without this adhesive layer, in the U.S. patent, the Cr₂O₃ layer, through its compressive mechanical stress, could fly off the head face. The Cr layer forms, as it were, an elastic layer capable of absorbing the above mechanical stress. Furthermore, this patent discloses the idea of the Cr layer also serving as a diffusion layer, oxidation layer, and corrosion layer.

As stated before, PTR leads to distance losses. However, the application of a wear-resistant layer increases the distance between medium and the magnetic head. Indeed, attempts may be made to keep the wear-resistant layer as thin as possible, but according to the U.S. patent a minimum thickness of 10 nm must be maintained. Then, too, distance losses continue to occur. These distance losses make themselves felt all the worse as a shorter wavelength recording is applied, that is to say a greater information density on the medium in the direction of movement of the medium relative to the magnetic head or a greater "linear recording density". At present, with the well-known technology, a recording is used with a wavelength up to about 0.7 µm. In aiming at an increasingly shorter wavelength recording, that is to say a wavelength of less than 0.7 µm, it becomes more important to reduce the thickness of the wear-resistant layer further than the lower limit of 10 nm, indicated in the above U.S. patent.

Surprisingly, it has been found that the limitations imposed in the U.S. patent on the layer thickness by no means always need to be applicable. The main reason for this resides in a changed insight gained by inventors into the technique of applying wear-resistant layers onto magnetic heads.

According to the invention, it has been found that a magnetic head may also be made with a wear-resistant layer having a thickness of less than 10 nm.

Indeed, U.S. patent 6,023,840 discloses a magnetic head with a layer of 3-7.5 nm, but this layer serves as a protective layer, rather than as a wear-resistant layer, since the magnetic head described in this patent is intended for cooperation with a hard disk, with no contact between magnetic head and hard disk.

A layer having a thickness of less than 10 nm is possible by using reactive sputtering of a metallic or oxidic target, reactive evaporation, or other techniques suitable therefor, such as ion beam sputtering of, for instance, Cr or Ti in an oxygen ambience. When starting from NiFe flux conductors in the layer structure of the magnetic head, two competitive processes occur in a sputtering process of Cr in an oxygen ambience: on the one hand, a process of alloy formation of NiFe and Cr, an on the other hand, an oxidation process by which a non-magnetic chromium-oxygen compound is precipitated onto the magnetic head. Both processes, naturally and depending on the layer thickness, lead to distance losses. The first process leads to a better adhesion of the non-magnetic chromium-oxygen compound to the alloy layer formed on the NiFe. The second process, the formation of the non-magnetic chromium-oxygen compound, leads to the reduction of the wear on the magnetic head. Both processes are in particular controlled by the energies of the relevant particles and, therefore, by the power density of the sputtering process and the partial pressures of the argon and the reactive gases, in this case oxygen. Therefore, no distinction is made between a first applied Cr layer and a subsequently applied Cr oxide layer. Incidentally, as in the above U.S. patent, at too great an impact energy, a separate Cr layer, in practice leads through diffusion, implantation and/or chemical reaction in the NiFe to a magnetically dead layer, which introduces an additional source of distance losses. Furthermore, in this process, no clear distinction is to made between the sputtering of Cr particles or of Cr oxide particles, and whether Cr oxidation takes place only after precipitation of Cr. Anyhow, the wear-resistant layer is built up from a chromium-oxygen layer in which the Cr, from inside to outside, changes from a Cr layer being mainly in the metallic mode into a Cr layer being mainly in the oxide mode, and in which, in the metallic mode, the chromium partly forms an alloy with the material of the magnetic flux conductors in the layer structure. Instead of a sputtering process of chromium in an oxygen ambience, a sputtering process of chromium in a nitrogen ambience is possible as well. In that case, the wear-resistant layer is built up from a chromium-nitrogen layer in which the Cr, from inside to outside, changes from a Cr layer being mainly in the metallic mode into a Cr layer being mainly in the nitride mode.

The cause of wear on the magnetic head can reside in the material in which the layer structure of the magnetic head is embedded, as well as in the material of the magnetic tapes used in recording and reproducing devices in which the magnetic head is arranged.

The layer structure in a magnetic head is embedded in a ceramically pressed material, often consisting of a two-component ceramic, in particular an Al₂O₃/TiC (Alsimag) ceramic. According to the insight gained by the invention, wear would occur owing to the fact that, for instance, more or less loose grains obtained by polishing at the Alsimag surface are drawn out of the ceramic material by the magnetic tape moving along, and are carried along and come to whirl in the always already present minute recess at the place of the layer structure in the magnetic head. These wear-producing particles are referred to as "head cleaning agent (HCA)"; the hardness of the HCA is much greater than that of NiFe or SiO₂, that is to say 20 GPa, respectively 1.2 GPa and 8 GPa.

A further, but smaller wear is caused by the magnetic tape, that is to say by the release of Fe-containing particles present therein.

Furthermore, apart from these wear phenomena, so-called "browstain" formation occurs; this is the formation of an Fe oxide layer on the layer structure, in particular on the NiFe magnetic flux conductors.

The effect of the application of a wear-resistant layer may be illustrated with reference to the appended diagram. This diagram shows the so-called Wallace factor; this is the distance loss in dB, plotted against the wavelength X of the information on the medium in µm at diverse distances between the head face and the medium. The head face is not worn out. When changing, at a distance d of, for instance, 100 nm, from a recording with a wavelength of 0.7 µm into a recording with a wavelength of 0.5 µm, an additional loss of about 3 dB occurs. This means that the application of a wear-resistant layer in particular at shorter wavelengths adds additional distance losses. This means that the thickness of the wear-resistant layer must be kept as small as possible, in particular as the wavelength is chosen to be shorter, which is the tendency in the present developments.

The idea of trying thinner layers is based, besides on the advancing requirements imposed on magnetic heads and recording system, to a considerable extent on a changed insight into the wear mechanism. Formerly, it was believed that the wear was mainly caused by released particles at the underside of a magnetic tape; these particles were supposed to make holes in the head face and in particular in the relatively soft magnetic flux material, that is to say in the material of which the poles of the magnetic head are made. As stated before, the causes of wear, however, are found to be very diverse, in which connection the wear caused by the Alsimag layer is referred to as the main cause. For this reason, the application of a wear-resistant layer only on the Alsimag layer could suffice. This means that the thickness of the wear-resistant layer at the place of the layer structure is zero. Because of the wear caused by magnetic tapes, it is better, however, to apply the wear-resistant layer onto the head face of the layer structure or onto the entire magnetic head. Because of the fact that the surface of the surface to be provided with a wear-resistant layer naturally possesses some roughness, the minimum layer thickness seems to be determined by the roughness of the surface. It is not necessary, however, to provide the surface completely with a wear-resistant layer; through the application of a few molecular layers the roughnesses in the surface can be covered for such a part that, from a physical point of view, reference can be made to a covering layer.

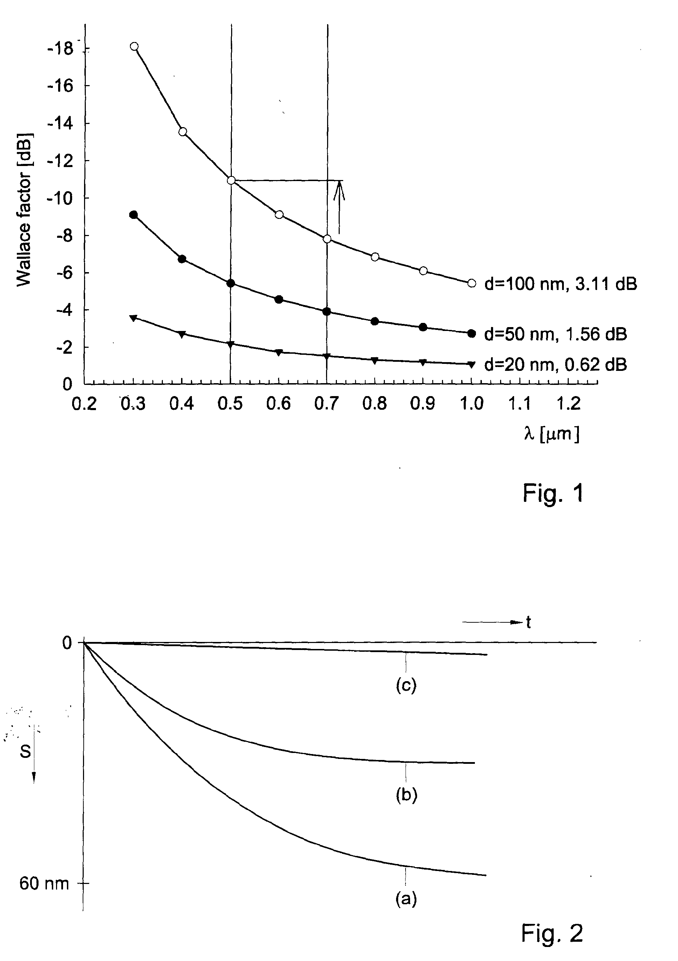

The effect of the diverse causes of wear is shown in Fig. 2. This Figure shows a diagram in which the hollowing (S) in the layer structure is represented over time (t). The curve (a) shows the wear without application of wear-resistant layer. The curve (b) shows the wear when a wear-resistant layer is only applied onto the Alsimag. The curve (c) shows the wear when a wear-resistant layer is applied onto the entire magnetic head. In the last two cases, a wear-resistant layer of less than 10 nm was applied, obtained by sputtering of the Alsimag, or the head face of the magnetic head with Cr in an oxygen ambience.

Finally, it should be noted that the invention not only relates to a magnetic head, as described before, but also to a recording and/or reproducing device, provided with such a magnetic head.

The invention is not limited to the exemplary embodiments described herein with reference to the drawing, but comprises all kinds of modifications thereof, of course as far as falling within the scope of protection of the appended claims.

## Claims

1. A magnetic head for reading and/or writing information in direct contact with a magnetic tape, which magnetic head is provided with a head face and a layer structure with magnetic flux conductors, a transducer element, and a transducer gap, the layer structure terminating at the head face, and the head face being at least partly provided with a wear-resistant chromium-containing layer, **characterized in that** the wear-resistant layer has a thickness of less than 10 nm.

2. A magnetic head according to claim 1, **characterized in that** the wear-resistant layer is built up from a chromium-oxygen layer in which the Cr, from inside to outside, changes from a Cr layer being mainly in the metallic mode into a Cr layer being mainly in the oxide mode, and in which, in the metallic mode, the chromium partly forms an alloy with the material of the magnetic flux conductors in the layer structure.

3. A magnetic head according to claim 1 or 2, **characterized in that** the wear-resistant layer is applied onto the head face of the layer structure.

4. A magnetic head according to claim 1 or 2, **characterized in that** the wear-resistant layer is applied onto the head face of the ceramic layer between which the layer structure is embedded.

5. A magnetic head according to claim 1 or 2, **characterized in that** the wear-resistant layer is applied onto the entire magnetic head.

6. A recording and/or reproducing device, provided with a magnetic head according to any one of the preceding claims.
